# EUROPEAN PATENT APPLICATION

(11) **EP 4 488 593 A1**
(43) Date of publication of application: **08.01.2025**
(21) Application number: 23184232.9
(22) Date of filing: 07.07.2023
(51) Int. Cl.: F24F 11/30, G06T 7/00

(54) **METHOD AND SYSTEM FOR REMOTE BUILDING ANALYSIS AND VERIFICATION FOR ENERGY EFFICIENCY IMPROVEMENTS**

(71) Applicant: Vreed GmbH, 70176 Stuttgart (DE)
(72) Inventor: Witkovsky, Jan, 70174 Stuttgart (DE); Wolter-Roessler, Thomas, 70174 Stuttgart (DE)
(74) Representative: Mzb PartmbB

(57) **Abstract**

The present invention, within the domain of energy efficiency and building analysis, addresses the problem of costly and time-consuming on-site inspections for energy renovation. It provides a method and system for remote, digitized capture and validation of building details, employing photogrammetry, image recognition, data comparison and validation from multiple sources, including 3D cadastral data, geolocation, aerial imagery and user-submitted photos. The invention derives qualitative and quantitative attributes of the building, such as geometry, facade area, roof complexity, heating system details, window measurements, and building orientation. The technical solution facilitates quick, accurate and reliable remote building inspections, which can significantly expedite energy efficiency renovation processes. The primary use of the invention is in fields related to energy consulting, building renovations, real estate valuations, and financial institutions dealing with energy renovation projects.

## Description

### Technical Field

The invention relates to the process and products as per the prior art portion of the independent claims.

### Background Art

One aspect of the property sector that has seen increased attention is energy-efficient renovations. The sustainability and energy consumption of buildings are important considerations in contemporary property development. Such renovations require several documents such as an energy performance certificate, individual renovation roadmap, cost plans, offers, and others. The production of these documents necessitates the gathering of accurate information and data about the property.

Existing art entails conducting an in-person survey of the building by a certified energy consultant to gather this information. This procedure is usually time-consuming and resource-intensive, requiring a series of steps and physical presence of expert personnel at the property location. Additionally, it often results in a significant delay from the first request to the generation of necessary documentation.

### Summary of Invention

The invention is set out in the appended set of claims.

### Technical Problem

The technical problem underlying the present invention is rooted in the difficulties and inefficiencies associated with traditional building inspection procedures, particularly those related to energetic renovation.

Firstly, conventional methods necessitate the physical presence of a certified energy consultant at the building location. The on-site visit requires substantial time and resources, which imposes considerable logistical burden and costs on all parties involved.

Secondly, these traditional procedures entail a significant amount of time from the initial request to the production of the necessary documents, such as an energy performance certificate, individual renovation roadmap, and cost plans, among others. This prolonged process often causes delays and reduces the overall efficiency of the renovation project.

Additionally, the traditional approach for gathering and validating data about a building depends heavily on manual efforts and subjective judgements. This is particularly concerning given the importance of accuracy and comprehensiveness in the data for creating renovation plans, estimating costs, and applying for funding or financial aids.

Therefore, the technical problem to be solved by the present invention is to provide a method and associated system for verifying a building's identity that is not only more efficient and cost-effective but also able to integrate various data sources and harness modern technologies to improve accuracy, comprehensiveness, and reliability.

### Solution to Problem

As shall be further elucidated in the following description, this problem is solved as per the characterizing portion of the independent claims.

### Advantageous Effects of Invention

The advantageous effect of the present invention is manifold, addressing several of the drawbacks associated with traditional building inspection and renovation methods.

Firstly, the invention mitigates the necessity for on-site visits by certified energy consultants. By employing remote guided verification via videoconference, the method significantly reduces time and resource requirements. This alleviates logistical constraints and costs, ultimately making the process of building verification more efficient and accessible to a wider range of occupants.

Secondly, the integration of various data sources, along with image recognition and photogrammetry techniques, offers a more accurate and comprehensive data collection. The use of these advanced technologies not only improves the quality of the collected data but also automates the data collection and analysis processes. This automation reduces the scope for human error and enhances the overall reliability and consistency of the information gathered.

Thirdly, by creating a geometrically and energetically corresponding digital twin of the building based on the extracted attributes, blueprints, utility bills, and reference data, the invention allows for sophisticated simulations and data analysis. This capability can provide valuable insights into the energy consumption of the building and potential areas for improvement, facilitating more effective and tailored renovation plans.

Fourthly, the invention empowers owners and occupants to actively participate in the building verification process. This involvement not only reduces dependency on external experts but also fosters a greater understanding and engagement among occupants regarding the energetic aspects of their building.

Fifthly, the invention's ability to propose renovation measures based on defined goals and calculate associated costs and subsidies provides a valuable tool for all stakeholders. By offering this insight, the method assists them in making informed decisions about the renovation measures that best align with their objectives and budget.

Lastly, the invention streamlines the process of preparing and providing essential documents for renovation projects. This efficiency, combined with the high data quality, enhances the likelihood of securing funding or financial aids for the proposed renovation measures, promoting more sustainable and energy-efficient building practices.

### Description of Embodiments

An embodiment would encompass a series of steps employed to remotely verify a building's identity as asserted by an occupant, culminating in the creation of a geometrically and energetically corresponding digital twin of the building, and the proposition of appropriate renovation measures. While the methodological sequence is elucidated below, it should be noted that the actual implementation may vary according to the specific circumstances and requirements.

The process begins by establishing a videoconference between a remote agent and an occupant of the building. This videoconference is facilitated by the occupant's mobile device and a remote server, the latter typically operated by or on behalf of the agent's employer. An online appointment for the videoconference may have been scheduled beforehand via a digital booking portal to ensure the convenience of both parties.

Once the videoconference is initiated, the agent relays guidance to the occupant about a walkthrough of the building. As the occupant follows the given instructions, they capture imagery of the building using their mobile device. This imagery, which is relayed to the agent via the videoconference, provides crucial data about the building's geometry, condition, and equipment.

In addition to the videoconference imagery, the occupant might capture and upload blueprints of the building and bills for utilities such as electricity, gas, or oil. These documents can provide additional data regarding the building's configuration and energy consumption.

Attributes are then extracted from the imagery and the documents by the server, using techniques such as image recognition or photogrammetry. These attributes could pertain to the building's exterior, such as its dimensions, facade, roof shape and complexity, extensions, and window details, or the building's interior, including a utility room containing a heating unit, for instance. Specific locations around the building, such as the gable side, eave side, and detailed views of windows and facade, may augment the walkthrough.

Subsequently, the server matches the extracted attributes with reference data. Such reference data can be sourced from multiple online mapping services, official cadastral data, or other reliable sources. This matching, which may leverage aerial or panoramic images for a comprehensive view of the building's configuration, could be based on qualitative traits such as the shape of the building's ground plan, type and complexity of the roof, and any additional structures such as dormers, annexes, garages, bay windows, or conservatories. Typically, it would also consider quantitative data such as the external dimensions of the building, surface area of the facade, number of floors above ground (considering the structure of the roof), individual and total surface area of the windows, and surface area of the roof.

Assuming that a match can be established to a reasonable degree of certainty, the information obtained from the process, such as the building's floor plan, roof form, facade area, window details, heating system details, and orientation, among others, is reconciled with the extracted attributes, blueprints, bills, and reference data to create a digital twin of the building.

This digital twin can be used to propose renovation measures, considering the goals defined by the occupant, such as a targeted energy efficiency class for the building. Once these measures are determined, costs and subsidies for the proposed renovations can be calculated, with associated documents like a cost plan, preferably according to DIN 276, or an individual renovation schedule, prepared and provided.

This outlined process is merely illustrative and not restrictive. Other embodiments are possible and can offer the same benefits of remotely verifying a building's identity, making the process more efficient, and recommending renovation measures based on a building's individual characteristics.

### Example

An owner-occupant, aiming to improve their building's energy efficiency, schedules an online appointment with an energy consulting service provider through a digital booking portal, identifying the subject building by address, plot number, geographic coordinates, or otherwise. On the day of the appointment, the owner uses their smartphone or tablet PC to connect to the provider's server, establishing a videoconference with one among their agents.

During their videoconference, the agent instructs the owner to conduct a walk-through of the building, focusing on specific details such as the exterior facade, window arrangements, and utility room that houses a heating installation whose type plate is captured in the process. In addition to the live video stream of this guided inspection, the owner uploads blueprints of the building and recent utility bills.

The server processes the uploaded information and extracts relevant attributes using image recognition and photogrammetry. For instance, it identifies the building as having a rectangular base, a saddle roof, two floors, a small garage on the west side, and large bay windows on the south side. Inside the utility room, the server identifies the heating system as a gas furnace from a reputable manufacturer, dating back to the year 2005.

The server then cross-references the extracted attributes with 3D cadastral data, satellite and panoramic images from online mapping services, and other reliable data sources pertinent to the building that the owner claims was inspected. Further considering a geolocation reported by the owner's mobile device and any geotags derived from geocoded photography uploaded by the owner, the server concludes that the asserted address of the building is plausible, thus considering the latter authenticated.

In view of the available utility bills and the specifications of the identified heating system, the server estimates the building's current energy consumption and generates its digital twin. This digital twin represents an accurate and detailed 3D model of the building, considering both its structural features and energy characteristics. Using the data from the digital twin and the occupant's energy efficiency goals, the server proposes several renovation measures. These may include installing roof insulation, upgrading the windows to triple-glazed versions, and replacing the heating system with a more energy-efficient model.

The server then calculates the costs and potential subsidies associated with these renovation measures, considering factors such as local regulations, available incentive programs, and the average market rates for the proposed renovation works. The server prepares a detailed cost plan and renovation schedule that is compliant with DIN 276 standards and shares this information with the owner-occupant.

### Industrial Applicability

The current invention finds a wide scope of industrial applicability and can be put into practice in multiple fields associated with real estate, energy efficiency, and sustainable construction industries. It is particularly applicable in the sector of energy renovation and refurbishing of buildings, a market segment with significant growth potential due to increasing concerns about energy conservation, sustainability, and climate change.

The present invention can aid businesses and organizations that provide energy consulting services, by equipping them with a precise, efficient, and user-friendly tool for remote assessment of buildings. As such, it can be incorporated into their operations to streamline and optimize the process of preparing for and executing energy renovation projects.

Further, the invention can be employed by financial institutions, including banks and funding agencies, that require accurate and verified data on a building's energy performance as a prerequisite for issuing loans or grants for energy renovation projects. In these settings, the invention can serve as an efficient and reliable solution for validating building data remotely, reducing the time, effort, and cost typically associated with on-site visits and inspections.

Moreover, the current invention can also find application in the context of real estate transactions and valuations, where accurate and verified data on a building's energy performance can significantly influence the building's value. Here, the invention can provide real estate professionals with a tool to efficiently gather and verify this crucial information, enhancing the accuracy and reliability of their valuation reports.

## Claims

1. Method of verifying, under guidance by a remote agent, a building's
identity as asserted by an occupant of the building,
**characterized in**
establishing, by means of a mobile device, held by the occupant, and a remote server, a videoconference between the agent and the occupant, relaying, by means of the videoconference, the guidance to the occupant, the guidance pertaining to a walk through the building,
during the walk-through, capturing imagery of the building using the device, relaying, by means of the videoconference, the imagery to the agent, extracting from the imagery selected attributes of the building and
matching, by means of the server, the extracted attributes with reference data from sources other than the occupant.

2. Method according to claim 1, **characterized in that** the attributes of the
building pertain to its geometry, condition, or equipment.

3. Method according to claim 1 or 2, **characterized in that** the attributes
are extracted from the imagery by means of image recognition or photogrammetry.

4. Method according to any of the preceding claims, **characterized in that**
the reference data includes aerial or panoramic images from online mapping services or official cadastral data.

5. Method according to any of the preceding claims, **characterized in that**
the matching is qualitative or quantitative.

6. Method according to any of the preceding claims, **characterized in that**
the walk-through encompasses locations around the building, such as gable side, eave side, window detail, and facade detail.

7. Method according to claim 6, **characterized in that**
the locations comprise a utility room comprising a heating unit,
the imagery comprises a photography of a type plate of the heating unit,
the attributes comprise a model of the heating unit and
the sources comprise a database of heating units.

8. Method according to any of the preceding claims, further comprising
scheduling an online appointment for the videoconference via a digital booking portal.

9. Method according to any of the preceding claims, further comprising
capturing, by means of the mobile device, and uploading blueprints of the building and bills for utilities such as electricity, gas, or oil, and
evaluating, by means of the server, the blueprints and bills.

10. Method according to claim 9, further comprising
creating a geometrically and energetically corresponding digital twin of the building by reconciling the extracted attributes, blueprints, bills, and reference data.

11. Method according to any of the preceding claims, further comprising
proposing renovation measures considering goals defined by the occupant, such as targeted energy efficiency class of the building.

12. Method according to claim 11, further comprising
calculating costs and subsidies for the proposed measures and
preparing and providing associated documents such as a cost plan, preferably according to DIN 276, or individual renovation schedule.

13. Data processing apparatus comprising means for carrying out the
method of any of the preceding claims.

14. Computer program comprising instructions which, when the program is
executed by a computer, cause the computer to carry out the method of any of the preceding method claims.

15. Data carrier signal carrying the program of the previous claim.
